# EUROPEAN PATENT APPLICATION

(11) **EP 1 713 277 A1**
(43) Date of publication of application: **18.10.2006**
(21) Application number: 05703584.2
(22) Date of filing: 14.01.2005
(51) Int. Cl.: H04N 7/24, H04N 7/173, H04N 7/64

(54) **MOVING PICTURE COMMUNICATION DEVICE, MOVING PICTURE COMMUNICATION SYSTEM, AND MOVING PICTURE COMMUNICATION METHOD**

(30) Priority: 23.01.2004 JP 2004015756
(71) Applicant: NEC CORPORATION, Tokyo 101-8001 (JP)
(72) Inventor: KOYAMA, Kazuhiro, c/o NEC CORPORATION,, Tokyo 1088001 (JP); OZAWA, Kazunori, c/o NEC CORPORATION,, Tokyo 1088001 (JP)
(74) Representative: Vossius & Partner
(86) International application number: PCT/JP2005/000345
(87) International publication number: WO 2005/071967

(57) **Abstract**

A moving picture communication device and a gateway capable of suppressing or limiting image quality deterioration as well as a moving picture communication system including them are provided. Control information 141 is transmitted from a moving picture reception/decoding device 2 to a moving picture encoding/transmission device 3 at a predetermined time interval. The moving picture encoding/transmission device 3 performs encoding in the intra-frame encoding mode according to the control information 141, thereby suppressing the propagation of image deterioration caused by a transmission error to a subsequent frame and performs image refresh operations at a predetermined interval. The moving picture encoding/transmission device 3 performs the image refresh operation at a predetermined interval so as to recover from image deterioration when the control information 141 is received even if erroneous recognition has occurred, i.e., normal decoding is recognized in spite of the fact that the image deterioration has been caused by a transmission error.

## Description

### TECHNICAL FIELD

The present invention relates to a moving picture communication device and a gateway used to send/receive images, and a moving picture communication system including them.

### BACKGROUND ART

In recent years, as methods for compression-encoding a moving picture signal and efficiently transmitting it through a narrow transmission band, the ITU-T (International Telecommunication Union Telecommunication Standardization Sector) recommendations H.261 and H.263, or MPEG-4 (Moving Picture Expert Group-4), which has been internationally standardized by ISO (International Organization of Standardization)/IEC (International Electrotechnical Commission), are known.

In general, the first frame is intra-frame encoded and interframe predictive encoding is used for subsequent frames in moving picture compression encoding systems such as the aforementioned H.261 and H.263 or MPEG-4. Whereas spatial redundancy within each frame is exploited in intra-frame encoding, temporal redundancy between current and prior frames is exploited in interframe predictive encoding, in addition to spatial redundancy within each frame.

Further, in moving picture compression encoding systems such as the aforementioned H.261 and H.263 or MPEG-4, variable-length coding utilizing Huffman codes is used. In these methods, for compressed parameters and coefficients, short codes are assigned to values with a high frequency of occurrence and long codes are assigned to values with a low frequency of occurrence, therefore efficient compression coding is realized efficiently.

A transmission error occurs when a bit stream compression-encoded by an encoder as described above is transmitted to a decoder via a network. When the network is a packet exchange network, the transmission error appears as a packet loss and it appears as a bit error when the network is a line exchange network. These transmission errors cause image quality deterioration to video signals, decoded by the decoder. Further, since transmission errors occur in bursts in a wireless communication network, the image quality deterioration of decoded video signals becomes more notable.

As a countermeasure against the transmission errors described above, for instance, a technology where a service quality managing device for monitoring the service quality (QoS) of bit streams sent/received is provided and resources with high service quality are obtained when service quality degradation is detected is introduced by Japanese Patent Kokai Publication No. JP-P2002-135300A.
[Patent Document 1]
Japanese Patent Kokai Publication No. JP-P2002-135300A

### DISCLOSURE OF THE INVENTION

### PROBLEMS TO BE SOLVED BY THE INVENTION

As described above, since the first frame is intra-frame encoded and interframe predictive encoding is used for subsequent frames in a moving picture compression encoding system, the influence of a transmission error spreads in both the spatial and temporal directions, and once image quality deterioration occurs, it propagates over subsequent frames.

Further, as described above, since variable-length coding utilizing Huffman codes is used in a moving picture compression encoding system, even when a transmission error gets into a bit pattern to be decoded, there is a possibility that the bit pattern accompanied by the transmission error might match a combination of Huffman codes. In this case, despite the fact that image quality deterioration has been caused by the transmission error, it is erroneously recognized as normal decoding, and the image quality deterioration is not detected.

The present invention has been invented to solve the above-described problems, and it is an object to provide a moving picture communication device and a gateway capable of suppressing or limiting image quality deterioration in the above-described moving picture compression encoding systems, and a moving picture communication system including them.

It is another object of the present invention also to provide a moving picture communication device and a gateway wherein the above-described erroneous recognition of transmission errors that occurs in variable-length coding is prevented, and a moving picture communication system including them.

### MEANS TO SOLVE THE PROBLEMS

According to a first aspect of the present invention that provides means for solving the aforementioned problems, a moving picture reception/decoding device or gateway that decodes a bit stream encoded by a moving picture encoding/transmission device using a predetermined moving picture compression encoding method the device or gateway comprising: a control information creating unit and a control information transmitting unit, instructs and controls refresh operations, and is able to restore the intended image. First, the control information creating unit creates control information for controlling the operation of the moving picture encoding/transmission device. Then the control information transmitting unit transmits the control information to the moving picture encoding/transmission device and has the moving picture encoding/transmission device perform desired operations.

Further, according to a second aspect of the present invention, a moving picture encoding/transmission device for encoding video signals using a predetermined moving picture compression encoding method and for transmitting a bit stream. The device comprises: a control information receiving unit, a control information analyzing unit, and a moving picture encoding unit, performs a refresh operation, and is able to restore the intended image. First, the control information receiving unit receives the aforementioned predetermined control information and then the control information analyzing unit outputs encoding control information for controlling the encoding processing. Then the moving picture encoding unit executes the encoding processing according to the encoding control information.

Further, according to a third aspect of the present invention, there is provided a moving picture communication system for performing moving picture communication by a moving picture reception/decoding device or a gateway, and a moving picture encoding/transmission device.

Further, according to a fourth aspect of the present invention, there is provided a method in which moving picture communication is performed by the aforementioned moving picture reception/decoding device or gateway and a moving picture encoding/transmission device. In other words, there is provided a moving picture communication method using a pair of the moving picture encoding/transmission device for encoding video signals using a predetermined moving picture compression encoding method and for transmitting a bit stream and the moving picture reception/decoding device for decoding the bit stream. First, the moving picture reception/decoding device creates control information for controlling the operation of the moving picture encoding/transmission device and transmits it to the moving picture encoding/transmission device. Then the moving picture encoding/transmission device analyzes the control information, outputs encoding control information for controlling the encoding processing, and executes the encoding processing according to the encoding control information. Further, the moving picture reception/decoding device decodes the bit stream encoded according to the encoding control information.

### MERITORIOUS EFFECT OF THE INVENTION

According to the present invention, the image quality deterioration of a video caused by a transmission error and the propagation of the image deterioration can be suppressed and the intended image can be restored as soon as possible, even when normal decoding is erroneously recognized despite the fact that the image of the video has been deteriorated by an transmission error. The reason for this is because means for having a moving picture encoding/transmission device switch to an encoding method with low redundancy is taken while having a moving picture reception/decoding device or gateway transmit control information for controlling the moving picture encoding/transmission device.

### BRIEF DESCRIPTION OF THE DRAWINGS

FIG. 1 is a block diagram showing a structural example of a moving picture communication system relating to the present invention.
FIG. 2 is a block diagram showing the detailed structure of a moving picture reception/decoding device relating to a first embodiment of the present invention.
FIG. 3 is a block diagram showing the detailed structure of a moving picture encoding/transmission device relating to the first embodiment of the present invention.
FIG. 4 is a block diagram showing the detailed structure of a moving picture reception/decoding device relating to a second embodiment of the present invention.
FIG. 5 is a block diagram showing the detailed structure of a moving picture encoding/transmission device relating to a third embodiment of the present invention.
FIG. 6 is a block diagram showing another structural example of the moving picture communication system relating to the present invention.
FIG. 7 is a block diagram showing the detailed structure of a gateway between transmission paths relating to a fourth embodiment of the present invention.
FIG. 8 is a block diagram showing the detailed structure of a gateway between transmission paths relating to a fifth embodiment of the present invention.

### EXPLANATIONS OF SYMBOLS

- 1:: transmission path
- 131:: transmission encoded bit stream
- 132:: reception encoded bit stream
- 141:: transmission control information
- 142:: reception control information
- 2, 4:: moving picture reception/decoding device
- 3, 5:: moving picture encoding/transmission device
- 21, 41:: moving picture encoded data receiving unit
- 22:: moving picture decoding unit
- 23, 43:: control information creating unit
- 24:: control information transmitting unit
- 251:: encoded data
- 252:: control command
- 31:: moving picture encoding unit
- 32, 52:: moving picture encoded data transmitting unit
- 33:: control information receiving unit
- 34, 54:: control information analyzing unit
- 351:: control command
- 352:: encoding control information
- 353:: encoded data
- 45:: transmission band judging unit
- 461:: transmission band information
- 462:: control information creating command
- 55:: transmission band judging unit
- 561:: transmission band information
- 562:: encoding control information creating command
- 651:: retransmission encoded bit stream
- 7, 8:: gateway between transmission paths
- 72:: moving picture encoded data transmitting unit

### MOST PREFERRED MODE FOR CARRYING OUT THE INVENTION

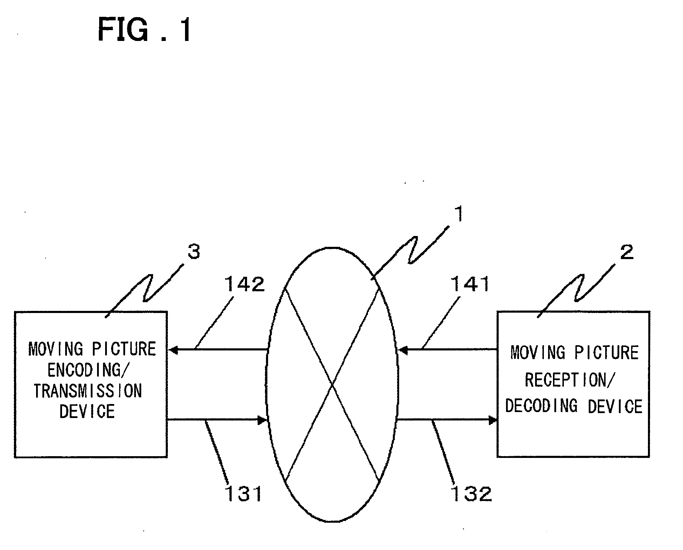

Next, preferred embodiments of the present invention will be described. The present invention is embodied as a moving picture communication system where a moving picture reception/decoding device (2 in FIG. 1) is connected to a moving picture encoding/transmission device (3 in FIG. 1) via a transmission path (1 in FIG. 1) in a preferred embodiment.

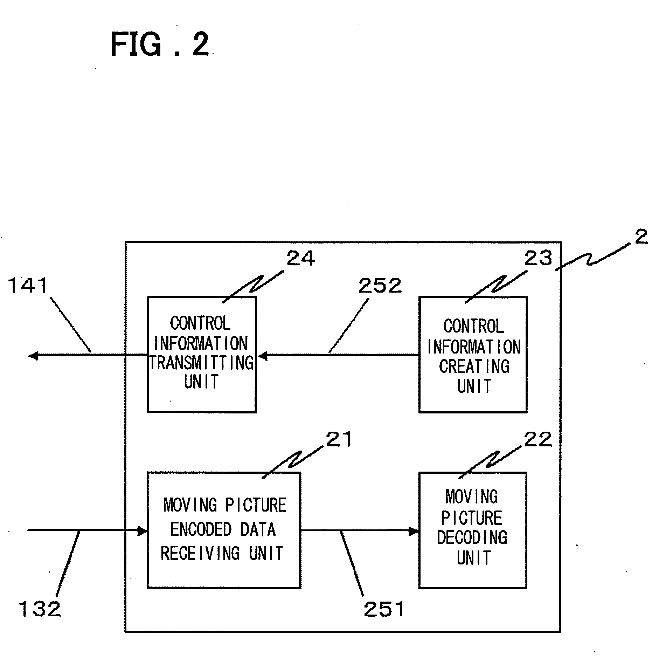

The moving picture reception/decoding device (refer to FIG. 2) comprises a control information creating unit (23 in FIG. 2) for creating control information for controlling the operation of the moving picture encoding/transmission device and a control information transmitting unit (24 in FIG. 2) for transmitting control information received from the control information creating unit to the moving picture encoding/transmission device.

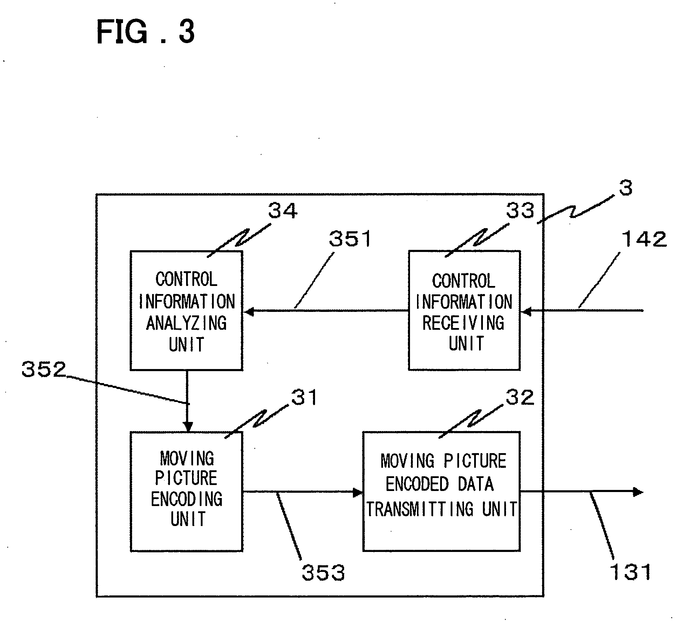

Meanwhile, the moving picture encoding/transmission device (refer to FIG. 3) relating to the present invention comprises a control information receiving unit (33 in FIG. 3) for receiving the control information transmitted by the moving picture reception/decoding device, a control information analyzing unit (34 in FIG. 3) for analyzing the control information received from the control information receiving unit and outputting encoding control information for controlling the operation of a moving picture encoding unit, and the moving picture encoding unit (31 in FIG. 3) for controlling the encoding operation according to the encoding control information received from the control information analyzing unit.

The operation of the moving picture communication system will be described. The control information creating unit (23 in FIG. 2) of the moving picture reception/decoding device, which plays back (reproduces) the image, creates a predetermined control command for controlling the moving picture encoding/transmission device at a predetermined time interval or a predetermined frame interval. Then the control information transmitting unit (24 in FIG. 2) creates transmission control information using a control command created by the control information creating unit (23 in FIG. 2) and transmits it to the transmission path so that the moving picture encoding/transmission device can receive it.

Meanwhile, the control information receiving unit (33 in FIG. 3) of the moving picture encoding/transmission device, which transmits the image, receives the control information from the aforementioned moving picture reception/decoding device via a transmission path. More concretely, the control information receiving unit (33 in FIG. 3) deletes header information added at the time of the transmission from the control information, obtains the control command, and outputs it.

The control information analyzing unit (34 in FIG. 3) decodes the control command outputted by the control information receiving unit (33 in FIG. 3), outputs the encoding control information, and executes the analysis of the control information.

The moving picture encoding unit (31 in FIG. 3) refers to the encoding control information and operates so that it switches the encoding mode from the interframe predictive encoding mode to the intra-frame encoding mode for at least a part of the picture, when it compression-encodes a moving picture signal by a predetermined method.

According to the moving picture communication system described above, refresh operations are continuously performed at a predetermined time interval or frame interval, therefore it is possible to limit the occurrence of transmission errors and especially the propagation of them.

### [EMBODIMENT 1]

Next, a first embodiment of the present invention will be described in detail referring to FIGS. 1, 2, and 3. FIG. 1 is a block diagram showing a structural example of the moving picture communication system relating to the present invention. Referring to FIG. 1, the moving picture communication system relating to the present invention is constituted by the transmission path 1, the moving picture reception/decoding device 2, and the moving picture encoding/transmission device 3.

The transmission path 1 is a line exchange network or packet exchange network and it may be either wired or wireless.

The moving picture encoding/transmission device 3 is an encoding/transmission device for multimedia data that receives a moving picture signal, compression-encodes it using a moving picture compression encoding method such as the ITU-T recommendations H.261 and H263 or the ISO/IEC standard MPEG-4, and transmits a transmission encoded bit stream 131 to the transmission path 1. Further, the moving picture encoding/transmission device 3 has the functions of receiving reception control information 142, which corresponds to transmission control information 141 transmitted by the moving picture reception/decoding device 2, via the transmission path 1, and performing encoding processing using the result of control command analysis.

The moving picture reception/decoding device 2 is a reception/decoding device for multimedia data that receives a reception encoded bit stream 132, which corresponds to the transmission encoded bit stream 131 transmitted by the moving picture encoding/transmission device 3, via the transmission path 1, and decodes it. Further, the moving picture reception/decoding device 2 has the functions of creating a control command, which is described later, for controlling the moving picture encoding/transmission device 3 and transmitting the transmission control information 141 to the transmission path 1. Hereinafter, explanations will be made assuming that the moving picture reception/decoding device 2 conforms to, for instance, the 3G-324M of the 3GPP (3rd Generation Partnership Project) recommendation, or the ITU-T recommendation H.323.

FIG. 2 is a block diagram showing the structure of the moving picture reception/decoding device 2 in detail. Referring to FIG. 2, a moving picture encoded data receiving unit 21 receives the reception encoded bit stream 132, which has been compression-encoded using a moving picture compression encoding method such as the ITU-T recommendations H.261 and H263 or the ISO/IEC recommendation (standard) MPEG-4, from the transmission path 1. Further, the moving picture encoded data receiving unit 21 deletes header information etc. added at the time of the transmission from the reception encoded bit stream 132, to obtain encoded data 251.

Further, the moving picture encoded data receiving unit 21 is structured so that it conforms to the ITU-T recommendation H.223, for instance, when the transmission path 1 is a line exchange network and the moving picture reception/decoding device 2 is compliant with the 3GPP standard 3G-324M. On the other hand, the moving picture encoded data receiving unit 21 is structured as an RTP (Real-time Transport Protocol) packet receiving unit, for instance, when the transmission path 1 is a packet exchange network and the moving picture reception/decoding device 2 is compliant with the ITU-T recommendation H.323.

A moving picture decoding unit 22 decodes encoded data received from the moving picture encoded data receiving unit 21.

The control information creating unit 23 creates the control command 252 for controlling the moving picture encoding/transmission device 3 at a predetermined time interval or frame interval.

Further, the control information creating unit 23 is structured so that it conforms to, for instance, the ITU-T recommendation H.245. In this case, control commands specified by the ITU-T recommendation H.245 such as a videoFastUpdatePicture message and videoFastUpdateGOB message or the like (these are termed "videoFastUpdate message") are used as the control command 252.

The control information transmitting unit 24 creates the transmission control information 141 using the control command 252 outputted by the control information creating unit 23 and transmits it to the transmission path 1.

Further, the control information transmitting unit 24 is structured so that it conforms to the ITU-T recommendation H.223 when the transmission path 1 is a line exchange network and the moving picture reception/decoding device 2 is compliant with the 3GPP standard 3G-324M. On the other hand, the control information transmitting unit 24 is structured as an RTP packet transmitting unit when the transmission path 1 is a packet exchange network and the moving picture reception/decoding device 2 is compliant to the ITU-T recommendation H.323.

FIG. 3 is a block diagram showing the structure of the moving picture encoding/transmission device 3 in detail. Referring to FIG. 3, the moving picture encoding unit 31 receives a moving picture signal, compression-encodes it using a moving picture compression encoding method such as the ITU-T recommendations H.261 and H263 or the ISO/IEC standard MPEG-4, and creates encoded data 353. Further, when compression-encoding the signal, the moving picture encoding unit 31 refers to the encoding control information 352 received from the control information analyzing unit 34, described in detail later, and operates so that it switches the encoding mode from the interframe predictive encoding mode to the intra-frame encoding mode for at least a part of the picture.

A moving picture encoded data transmitting unit 32 creates the transmission encoded bit stream 131 using the encoded data 353 received from the moving picture encoding unit 31 and transmits it to the transmission path 1.

Further, the moving picture encoded data transmitting unit 32 is structured so that it conforms to the ITU-T recommendation H.223 when the transmission path 1 is a line exchange network and the moving picture reception/decoding device 2 is compliant with the 3GPP standard 3G-324M. On the other hand, the moving picture encoded data transmitting unit 32 is structured as an RTP packet transmitting unit when the transmission path 1 is a packet exchange network and the moving picture reception/decoding device 2 is compliant with the ITU-T recommendation H.323.

The control information receiving unit 33 receives the reception control information 142, which corresponds to the transmission control information 141, from the transmission path 1. Then the control information receiving unit 33 deletes header information added at the time of the transmission from the reception control information 142 and obtains a control command 351.

Further, the control information receiving unit 33 is structured so that it conforms to the ITU-T recommendation H.223 when the transmission path 1 is a line exchange network and the moving picture reception/decoding device 2 is compliant with the 3GPP standard 3G-324M. On the other hand, the control information receiving unit 33 is structured as an RTP packet receiving unit when the transmission path 1 is a packet exchange network and the moving picture reception/decoding device 2 is compliant with the ITU-T recommendation H.323.

The control information analyzing unit 34 decodes the control command 351 received from the control information receiving unit 33 and outputs the encoding control information 352 to the moving picture encoding unit 31.

Further, the control information analyzing unit 34 is structured so that it conforms to, for instance, the ITU-T recommendation H.245. In this case, the videoFastUpdate message (command) specified by the ITU-T recommendation H.245 is used as the control command 351. For instance, when the control command 351 is a videoFastUpdatePicture message, which is specified by the ITU-T recommendation H.245, the encoding control information 352 has an instruction for the moving picture encoding unit 31 to encode an entire frame in the intra-frame encoding mode.

As described above, the control information for controlling the moving picture encoding/transmission device 3 is created and transmitted by the control information creating unit 23 and the control information transmitting unit 24 of the moving picture reception/decoding device 2 at a predetermined time interval or frame interval. The control information is received and analyzed by the control information receiving unit 33 and the control information analyzing unit 34 of the moving picture encoding/transmission device 3, and the encoding mode of the moving picture encoding unit 31 is switched according to the result of the analysis. In other words, refresh operations are performed at a predetermined time interval or frame interval, reliably suppressing the occurrence of transmission errors and especially their propagation.

### [EMBODIMENT 2]

Next, a second embodiment of the present invention will be described in detail referring to FIGS. 1, 3, and 4. The second embodiment of the present invention has the same system configuration as the above-described first embodiment of the present invention. Therefore, what it has in common with the first embodiment will be omitted hereinafter and only differences will be described.

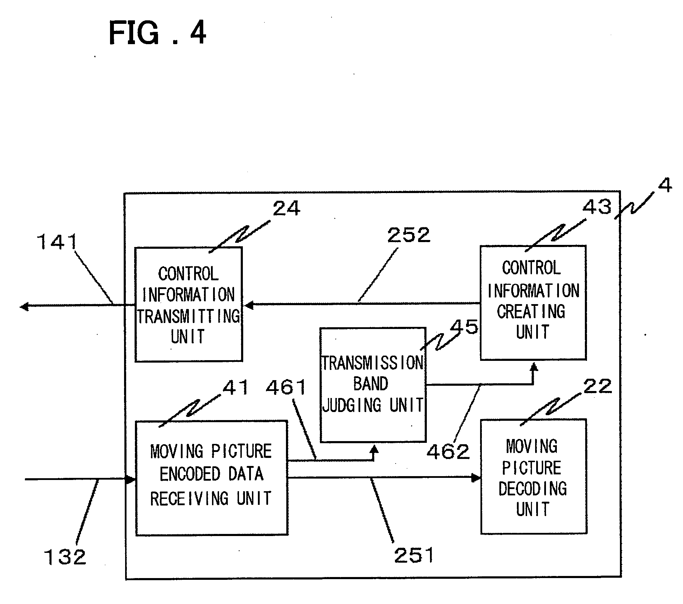

FIG. 4 is a block diagram showing the structure of a moving picture reception/decoding device relating to the second embodiment of the present invention in detail. Referring to FIG. 4, a moving picture encoded data receiving unit 41 receives the reception encoded bit stream 132, which has been compression-encoded using a moving picture compression encoding method such as the ITU-T recommendations H.261 and H263 or the ISO/IEC standard MPEG-4, from the transmission path 1. Further, the moving picture encoded data receiving unit 41 deletes header information added at the time of the transmission from the reception encoded bit stream 132 and obtains the encoded data 251. Then the moving picture encoded data receiving unit 41 calculates a transmission band from the reception encoded bit stream 132 and outputs transmission band information 461.

Further, the moving picture encoded data receiving unit 41 is structured so that it conforms to the ITU-T recommendation H.223 when the transmission path 1 is a line exchange network and the moving picture reception/decoding device 4 is compliant with the 3GPP standard 3G-324M. On the other hand, the moving picture encoded data receiving unit 41 is structured as an RTP packet receiving unit when the transmission path 1 is a packet exchange network and the moving picture reception/decoding device 4 is compliant with the ITU-T recommendation H.323.

A control information creating unit 43 creates the control command 252 for controlling the moving picture encoding/transmission device 3 at a predetermined time interval or frame interval. Further, the control information creating unit 43 changes the time interval or frame interval at which the control command 252 is created using a control information creating command 462 outputted by a transmission band judging unit 45, which is described later.

Further, the control information creating unit 43 is compliant with, for instance, the ITU-T recommendation H.245. In this case, the videoFastUpdate commands specified by the ITU-T recommendation H.245 are used as the control command 252.

The transmission band judging unit 45 judges whether or not it should change the time interval or frame interval at which the control information creating unit 43 creates the control command 252 using the transmission band information 461 calculated by the moving picture encoded data receiving unit 41. When it decides that the interval should be changed as a result of the judgment, the transmission band judging unit 45 creates the control information creating command 462.

Since the functions and operations of the processing units other than the ones described above are the same as those in the first embodiment, further explanations will be omitted. According to the second embodiment of the present invention, the control information corresponding to the transmission band is created and transmitted. Therefore it becomes possible to perform an image refresh operation without causing new delay or loss to the reception encoded bit stream.

Note that the transmission band judging unit 45 judges whether or not it is necessary to change the time interval or frame interval at which the control command 252 is created in the above-described second embodiment, however, the transmission band judging unit 45 may judge whether or not the control command 252 should be created and create the control information creating command 462 that instructs the creation of the control command 252 instead of the operation described above. In this case, it may configured so that the control information creating unit 43 creates the control command 252 only when it receives the control information creating command 462 from the transmission band judging unit 45.

### [EMBODIMENT 3]

Next, a third embodiment of the present invention will be described in detail referring to FIGS. 1, 2, and 5. The third embodiment of the present invention has the same system configuration as the above-described first embodiment of the present invention, therefore, what it has in common with the first embodiment will be omitted hereinafter and only differences will be described.

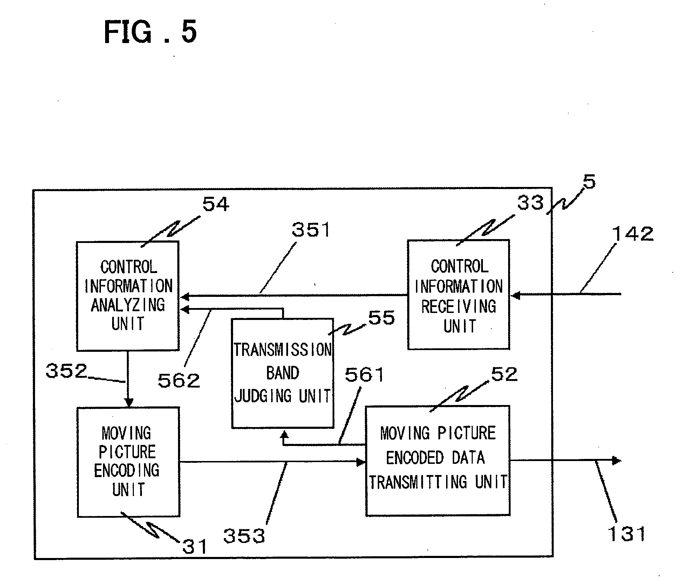

FIG. 5 is a block diagram showing the structure of a moving picture encoding/transmission device 5 relating to the third embodiment of the present invention in detail. Referring to FIG. 5, a moving picture encoded data transmitting unit 52 creates the transmission encoded bit stream 131 using the encoded data 353 received from the moving picture encoding unit 31 and transmits it to the transmission path 1. Further, the moving picture encoded data transmitting unit 52 calculates a transmission band from the transmission encoded bit stream 131 that it has transmitted and outputs transmission band information 561.

A control information analyzing unit 54 decodes the control command 351 received from the control information receiving unit 33, and it outputs the encoding control information 352 to the moving picture encoding unit 31 when it receives an encoding control information creating command 562 from a transmission band judging unit 55, which is described later.

Further, the control information analyzing unit 54 is structured so that it conforms to, for instance, the ITU-T recommendation H.245. In this case, the videoFastUpdate message specified by the ITU-T recommendation H.245 are used as the control command 351. For instance, when the control command 351 is a videoFastUpdatePicture message, which is specified by the ITU-T recommendation H.245, the encoding control information 352 has an instruction for the moving picture encoding unit 31 to encode an entire frame in the intra-frame encoding mode.

The transmission band judging unit 55 judges whether or not the control information analyzing unit 54 should output the encoding control information 352, using the transmission band information 561 calculated by the moving picture encoded data transmitting unit 52. When it decides that it should output it as a result of the judgment, the transmission band judging unit 55 outputs the encoding control information creating command 562 to the control information analyzing unit 54.

Since the functions and operations of the processing units other than the ones described above are the same as those in the first embodiment, further explanations will be omitted. According to the third embodiment of the present invention, the encoding control information corresponding to the band in which the control information is sent, in addition to the reception band, is created and transmitted. Therefore it becomes possible to perform an image refresh operation without causing new delay or loss to the reception encoded bit stream.

The second and third embodiments of the present invention are as described above. Further, it is also possible to configure a moving picture communication system using the moving picture reception/decoding device 4 of the second embodiment (refer to FIG. 4) and the moving picture encoding/transmission device 5 of the third embodiment. In this case, the initial value of the time interval or frame interval at which the moving picture reception/decoding device 4 transmits the control information is set low. Since the moving picture reception/decoding device 4 transmits the control information suitable for the bandwidth and the moving picture encoding/transmission device 5 also creates the encoding control information suitable for the bandwidth, an image refresh operation can be performed efficiently.

### [EMBODIMENT 4]

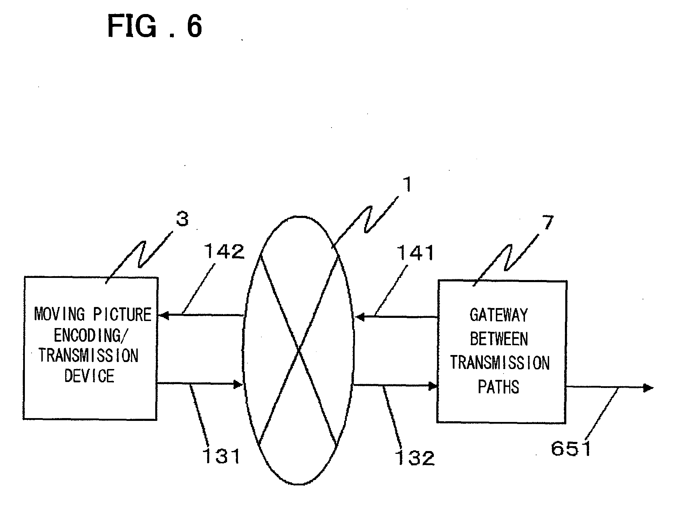

Next, a fourth embodiment of the present invention will be described in detail referring to FIGS. 3, 6, and 7. FIG. 6 is a block diagram showing another structural example of the moving picture communication system relating to the present invention. Referring to FIG. 6, the moving picture communication system relating to the present embodiment is constituted by the transmission path 1, the moving picture encoding/transmission device 3, and a gateway 7 between transmission paths. The fourth embodiment of the present invention has a similar system configuration to those of the first to third embodiments described above. Therefore, what it has in common with the first to third embodiments will be omitted hereinafter and only differences will be described.

The gateway 7 between transmission paths is a gateway that receives the reception encoded bit stream 132, which corresponds to the transmission encoded bit stream 131 transmitted by the moving picture encoding/transmission device 3, via the transmission path 1 and that has the function of transmitting a retransmission encoded bit stream 651 to a transmission path different from the transmission path 1. Further, the gateway 7 between transmission paths has the functions of creating the control command for controlling the moving picture encoding/transmission device 3 and transmitting the transmission control information 141 to the transmission path 1 as the moving picture reception/decoding device 2 described in the first to third embodiments.

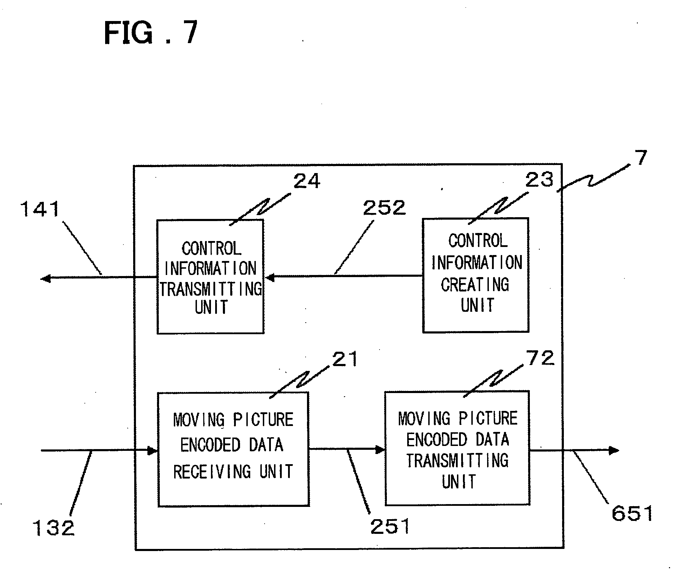

FIG. 7 is a block diagram showing the structure of the gateway 7 between transmission paths in detail. Referring to FIG. 7, a moving picture encoded data transmitting unit 72 creates the retransmission encoded bit stream 651 using the encoded data 251 received from the moving picture encoded data receiving unit 21 and transmits it to a transmission path different from the transmission path 1.

Since the functions and operations of the processing units other than the ones described above are the same as those in the first embodiment, further explanations will be omitted. According to the fourth embodiment of the present invention, the gateway 7 between transmission paths can transmit the transmission control information to the moving picture encoding/transmission device 3 at a predetermined time interval or frame interval even when it is difficult to have a moving picture reception/decoding device (not shown in the drawing) transmit the transmission control information to the moving picture encoding/transmission device 3 or when the moving picture reception/decoding device (not shown in the drawing) does not have the function of transmitting the transmission control information, and it becomes possible to have the moving picture encoding/transmission device 3 refresh the image.

### [EMBODIMENT 5]

Next, a fifth embodiment of the present invention will be described in detail referring to FIGS. 3, 6, and 8. The fifth embodiment of the present invention has a similar system configuration to those of the first to fourth embodiments described above. Therefore, what it has in common with the first to fourth embodiments will be omitted hereinafter and only differences will be described.

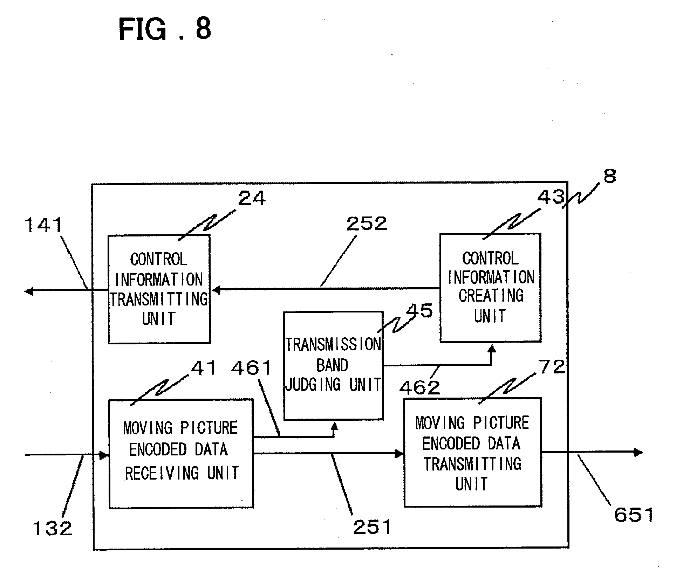

FIG. 8 is a block diagram showing the structure of a gateway 8 between transmission paths relating to the fifth embodiment of the present invention in detail. Since the function and operation of each processing unit shown in FIG. 8 are the same as those of the moving picture reception/decoding device in the second embodiment (refer to FIG. 4) and the fourth embodiment (refer to FIG. 7), they will not be explained.

According to the fifth embodiment of the present invention, the gateway 8 between transmission paths can create and transmit the control information corresponding to the transmission band as the moving picture reception/decoding device described in the above-described second embodiment. Therefore, in addition to the effects specific to the moving picture communication system including the gateway 7 between transmission paths described in the fourth embodiment, an image refresh operation can be performed without causing new delay and loss to the reception encoded bit stream.

### [EMBODIMENT 6]

The fourth and fifth embodiments of the present invention are as described above. Further, it is also possible to configure a moving picture communication system using the moving picture encoding/transmission device 5 of the above-described third embodiment (refer to FIG. 5) and the gateway 7 between transmission paths of the fourth embodiment. Similarly, a moving picture communication system can be configured using the moving picture encoding/transmission device 5 of the above-described third embodiment (refer to FIG. 5) and the gateway 8 between transmission paths of the fifth embodiment. In this case, the initial value of the time interval or frame interval at which the gateway 7 or 8 between transmission paths transmits the control information is set low. Since the gateway 7 or 8 between transmission paths transmits the control information suitable for the bandwidth and the moving picture encoding/transmission device 5 also creates the encoding control information suitable for the bandwidth, an image refresh operation can be performed efficiently.

It should be noted that the protocols and standards mentioned in the embodiments described above are merely examples used for explaining the present invention, and other protocols and standards may be used. As evident from the principles of the present invention, other protocols and standards can be applied according to the characteristics of the transmission path and the purposes of the moving picture communication system. Further, the videoFastUpdate message (commands) specified by the ITU-T recommendation H.245 are used as the control information in the embodiments described above, however, other message (commands) specified by the ITU-T recommendation H.245 may be used or a method specified by RFC 3261 recommendation SIP such as the INFO method may be used if each unit supports the SIP.

## Claims

1. A moving picture reception/decoding device decoding a bit stream encoded by a moving picture encoding/transmission device using a predetermined moving picture compression encoding method, **characterized in that** said moving picture reception/decoding device comprises:
a control information creating unit that creates control information for controlling the operation of said moving picture encoding/transmission device; and
a control information transmitting unit that transmits said control information to said moving picture encoding/transmission device.

2. The moving picture reception/decoding device as defined in claim 1 wherein said control information creating unit creates said control information at a predetermined interval.

3. The moving picture reception/decoding device as defined in claim 1 or 2 wherein said control information creating unit uses a message specified by the ITU-T recommendation H.245 as said control information.

4. The moving picture reception/decoding device as defined in claim 1 or 2 wherein said control information creating unit uses videoFastUpdate commands specified by the ITU-T recommendation H.245 as said control information.

5. The moving picture reception/decoding device as defined in claim 1 or 2 wherein said control information creating unit uses a method specified by RFC3261 SIP (Session Initiation Protocol) as said control information.

6. The moving picture reception/decoding device as defined in claim 1 or 2 wherein said control information creating unit uses the INFO method specified by RFC3261 SIP as said control information.

7. A moving picture encoding/transmission device encoding video signals using a predetermined moving picture compression encoding method, transmitting a bit stream, **characterized by** comprising:
a control information receiving unit that receives control information for controlling the operation of said moving picture encoding/transmission device;
a control information analyzing unit that analyzes said control information and outputs encoding control information for controlling said encoding, and
a moving picture encoding unit that executes said encoding according to said encoding control information.

8. The moving picture encoding/transmission device as defined in claim 7 wherein said moving picture encoding unit encodes at least a part of frames in an intra-frame encoding mode according to said encoding control information.

9. The moving picture encoding/transmission device as defined in claim 7 or 8 wherein said control information analyzing unit is able to analyze a message specified by the ITU-T recommendation H.245 as said control information.

10. The moving picture encoding/transmission device as defined in claim 7 or 8 wherein said control information analyzing unit is able to analyze videoFastUpdate commands specified by the ITU-T recommendation H.245 as said control information.

11. The moving picture encoding/transmission device as defined in claim 7 or 8 wherein said control information analyzing unit is able to analyze a method specified by RFC 3261 recommendation SIP as said control information.

12. The moving picture encoding/transmission device as defined in claim 7 or 8 wherein said control information analyzing unit is able to analyze the INFO method specified by RFC 3261 recommendation SIP as said control information.

13. A moving picture reception/decoding device decoding a bit stream encoded by a moving picture encoding/transmission device using a predetermined moving picture compression encoding method, **characterized by** comprising:
a control information creating unit that creates control information for controlling the operation of said moving picture encoding/transmission device;
a control information transmitting unit that transmits said control information to said moving picture encoding/transmission device; and
a transmission band judging unit that outputs a control information creating command for controlling said control information creating unit according to transmission band information calculated from received said bit stream.

14. The moving picture reception/decoding device as defined in claim 13 wherein said transmission band judging unit outputs said control information creating command that instructs the operation interval of said control information creating unit to be changed according to said transmission band information and said control information creating unit changes the interval at which it creates said control information according to said control information creating command.

15. The moving picture reception/decoding device as defined in claim 13 wherein said transmission band judging unit outputs said control information creating command that instructs the operation of said control information creating unit to be started according to said transmission band information and said control information creating unit creates said control information only when it receives said control information creating command.

16. The moving picture reception/decoding device as defined in any one of claims 13 to 15 wherein said control information creating unit uses a message specified by the ITU-T recommendation H.245 as said control information.

17. The moving picture reception/decoding device as defined in any one of claims 13 to 15 wherein said control information creating unit uses videoFastUpdate commands specified by the ITU-T recommendation H.245 as said control information.

18. The moving picture reception/decoding device as defined in any one of claims 13 to 15 wherein said control information creating unit uses a method specified by RFC 3261 recommendation SIP as said control information.

19. The moving picture reception/decoding device as defined in any one of claims 13 to 15 wherein said control information creating unit uses the INFO method specified by RFC 3261 recommendation SIP as said control information.

20. A moving picture encoding/transmission device encoding video signals using a predetermined moving picture compression encoding method, and transmitting a bit stream, **characterized by** comprising:
a control information receiving unit that receives control information for controlling the operation of said moving picture encoding/transmission device;
a control information analyzing unit that analyzes said control information and outputs encoding control information for controlling said encoding;
a moving picture encoding unit that executes said encoding according to said encoding control information; and
a transmission band judging unit that outputs an encoding control information creating command for controlling said control information analyzing unit according to transmission band information calculated from said transmitted bit stream.

21. The moving picture encoding/transmission device as defined in claim 20 wherein said control information analyzing unit analyzes said control information and outputs said encoding control information only when it receives said encoding control information creating command.

22. The moving picture encoding/transmission device as defined in claim 20 or 21 wherein said moving picture encoding unit encodes at least a part of frames in an intra-frame encoding mode according to said encoding control information.

23. The moving picture encoding/transmission device as defined in any one of claims 20 to 22 wherein said control information analyzing unit is able to analyze a message specified by the ITU-T recommendation H.245 as said control information.

24. The moving picture encoding/transmission device as defined in any one of claims 20 to 22 wherein said control information analyzing unit is able to analyze videoFastUpdate commands specified by the ITU-T recommendation H.245 as said control information.

25. The moving picture encoding/transmission device as defined in any one of claims 20 to 22 wherein said control information analyzing unit is able to analyze a method specified by RFC 3261 1 recommendation SIP as said control information.

26. The moving picture encoding/transmission device as defined in any one of claims 20 to 22 wherein said control information analyzing unit is able to analyze the INFO method specified by RFC 3261 recommendation SIP as said control information.

27. A gateway interconnecting networks between which a bit stream encoded by a moving picture encoding/transmission device using a predetermined moving picture compression encoding method is sent/received, **characterized by** comprising:
a control information creating unit that creates control information for controlling the operation of said moving picture encoding/transmission device; and
a control information transmitting unit that transmits said control information to said moving picture encoding/transmission device.

28. The gateway as defined in claim 27 wherein said control information creating unit creates said control information at a predetermined interval.

29. The gateway as defined in claim 27 or 28 wherein said control information creating unit uses a message specified by the ITU-T recommendation H.245 as said control information.

30. The gateway as defined in claim 27 or 28 wherein said control information creating unit uses videoFastUpdate commands specified by the ITU-T recommendation H.245 as said control information.

31. The gateway as defined in claim 27 or 28 wherein said control information creating unit uses a method specified by RFC3261 recommendation SIP as said control information.

32. The gateway as defined in claim 27 or 28 wherein said control information creating unit uses the INFO method specified by RFC3261 recommendation SIP as said control information.

33. A gateway interconnecting networks between which a bit stream encoded by a moving picture encoding/transmission device using a predetermined moving picture compression encoding method is sent/received, **characterized by** comprising:
a control information creating unit that creates control information for controlling the operation of said moving picture encoding/transmission device;
a control information transmitting unit that transmits said control information to said moving picture encoding/transmission device; and
a transmission band judging unit that outputs a control information creating command for controlling said control information creating unit according to transmission band information calculated from received said bit stream.

34. The gateway as defined in claim 33 wherein said transmission band judging unit outputs said control information creating command that instructs the operation interval of said control information creating unit to be changed according to said transmission band information, and said control information creating unit changes the interval at which it creates said control information according to said control information creating command.

35. The gateway as defined in claim 33 wherein said transmission band judging unit outputs said control information creating command that instructs the operation of said control information creating unit to be started according to said transmission band information; and
said control information creating unit creates said control information only when it receives said control information creating command.

36. The gateway as defined in any one of claims 33 to 35 wherein said control information creating unit uses a message specified by the ITU-T recommendation H.245 as said control information.

37. The gateway as defined in any one of claims 33 to 35 wherein said control information creating unit uses videoFastUpdate commands specified by the ITU-T recommendation H.245 as said control information.

38. The gateway as defined in any one of claims 33 to 35 wherein said control information creating unit uses a method specified by RFC 3261 recommendation SIP as said control information.

39. The gateway as defined in any one of claims 33 to 35 wherein said control information creating unit uses the INFO method specified by RFC recommendation 3261 SIP as said control information.

40. A mov.ing picture communication system configured by connecting the moving picture reception/decoding device as defined in any one of claims 1 to 6 and 13 to 19, and the moving picture encoding/transmission device as defined in any one of claims 7 to 12 and 20 to 26.

41. A moving picture communication system including the gateway as defined in any one of claims 27 to 39 and the moving picture encoding/transmission device as defined in any one of claims 7 to 12 and 20 to 26.

42. A moving picture communication method by a pair of a moving picture encoding/transmission device that encodes video signals using a predetermined moving picture compression encoding method and transmits a bit stream, and a moving picture reception/decoding device that decodes the bit stream, comprising:
a step where said moving picture reception/decoding device creates control information for controlling the operation of said moving picture encoding/transmission device, and transmits it to said moving picture encoding/transmission device;
a step where said moving picture encoding/transmission device analyzes said control information, outputs encoding control information for controlling said encoding, and executes said encoding according to said encoding control information; and
a step where said moving picture reception/decoding device decodes said bit stream encoded by said encoding according to said encoding control information.

43. A moving picture communication method by a pair of a moving picture encoding/transmission device that encodes video signals using a predetermined moving picture compression encoding method and transmits a bit stream, and a moving picture reception/decoding device that decodes the bit stream, comprising:
a step where said moving picture reception/decoding device creates control information for controlling the operation of said moving picture encoding/transmission device and transmits it to said moving picture encoding/transmission device;
a step where said moving picture encoding/transmission device analyzes said control information, outputs encoding control information for controlling said encoding, and executes said encoding according to said encoding control information; and
a step where said moving picture reception/decoding device decodes said bit stream encoded by said encoding according to said encoding control information and feeds transmission band information calculated from said received bit stream back to the processing of creating control information; wherein
said moving picture reception/decoding device requests an image refresh operation corresponding to the reception band.

44. A moving picture communication method by a pair of a moving picture encoding/transmission device that encodes video signals using a predetermined moving picture compression encoding method and transmits a bit stream, and a moving picture reception/decoding device that decodes the bit stream, comprising:
a step where said moving picture reception/decoding device creates control information for controlling the operation of said moving picture encoding/transmission device and transmits it to said moving picture encoding/transmission device;
a step where said moving picture encoding/transmission device analyzes said control information and outputs encoding control information for controlling said encoding;
a step where said moving picture encoding/transmission device executes said encoding according to said encoding control information and transmission band information calculated from a transmitted bit stream; and
a step where said moving picture reception/decoding device decodes said bit stream encoded by said encoding according to said encoding control information; wherein
said moving picture encoding/transmission device performs an image refresh operation according to control information from the receiving side and the transmission band.

## Amended claims

### Amended claims under Art. 19.1 PCT

1. (amended) A moving picture reception/decoding device decoding a bit stream encoded by a moving picture encoding/transmission device using a predetermined moving picture compression encoding method, **characterized in that** said moving picture reception/decoding device comprises:
a control information creating unit that creates control information for controlling the operation of said moving picture encoding/transmission device, irrespective of occurrence/nonoccurrence of the image quality deterioration caused by transmission error; and
a control information transmitting unit that transmits said control information to said moving picture encoding/transmission device.

2. The moving picture reception/decoding device as defined in claim 1 wherein said control information creating unit creates said control information at a predetermined interval.

3. The moving picture reception/decoding device as defined in claim 1 or 2 wherein said control information creating unit uses a message specified by the ITU-T recommendation H.245 as said control information.

4. The moving picture reception/decoding device as defined in claim 1 or 2 wherein said control information creating unit uses videoFastUpdate commands specified by the ITU-T recommendation H.245 as said control information.

5. The moving picture reception/decoding device as defined in claim 1 or 2 wherein said control information creating unit uses a method specified by RFC3261 SIP (Session Initiation Protocol) as said control information.

6. The moving picture reception/decoding device as defined in claim 1 or 2 wherein said control information creating unit uses the INFO method specified by RFC3261 SIP as said control information.

7. (amended) A moving picture encoding/transmission device encoding video signals using a predetermined moving picture compression encoding method, transmitting a bit stream, **characterized by** comprising:
a control information receiving unit that receives control information for controlling the operation of said moving picture encoding/transmission device, said control information being created/transmitted, irrespective of occurrence/nonoccurrence of the image quality deterioration caused by transmission error;
a control information analyzing unit that analyzes said control information and outputs encoding control information for controlling said encoding, and
a moving picture encoding unit that executes said encoding according to said encoding control information.

8. The moving picture encoding/transmission device as defined in claim 7 wherein said moving picture encoding unit encodes at least a part of frames in an intra-frame encoding mode according to said encoding control information.

9. The moving picture encoding/transmission device as defined in claim 7 or 8 wherein said control information analyzing unit is able to analyze a message specified by the ITU-T recommendation H.245 as said control information.

10. The moving picture encoding/transmission device as defined in claim 7 or 8 wherein said control information analyzing unit is able to analyze videoFastUpdate commands specified by the ITU-T recommendation H.245 as said control information.

11. The moving picture encoding/transmission device as defined in claim 7 or 8 wherein said control information analyzing unit is able to analyze a method specified by RFC 3261 recommendation SIP as said control information.

12. The moving picture encoding/transmission device as defined in claim 7 or 8 wherein said control information analyzing unit is able to analyze the INFO method specified by RFC 3261 recommendation SIP as said control information.

13. (amended) A moving picture reception/decoding device decoding a bit stream encoded by a moving picture encoding/transmission device using a predetermined moving picture compression encoding method, **characterized by** comprising:
a control information creating unit that creates control information for controlling the operation of said moving picture encoding/transmission device, irrespective of occurrence/nonoccurrence of the image quality deterioration caused by transmission error;
a control information transmitting unit that transmits said control information to said moving picture encoding/transmission device; and
a transmission band judging unit that outputs a control information creating command for controlling said control information creating unit according to transmission band information calculated from received said bit stream.

14. The moving picture reception/decoding device as defined in claim 13 wherein said transmission band judging unit outputs said control information creating command that instructs the operation interval of said control information creating unit to be changed according to said transmission band information and said control information creating unit changes the interval at which it creates said control information according to said control information creating command.

15. The moving picture reception/decoding device as defined in claim 13 wherein said transmission band judging unit outputs said control information creating command that instructs the operation of said control information creating unit to be started according to said transmission band information and said control information creating unit creates said control information only when it receives said control information creating command.

16. The moving picture reception/decoding device as defined in any one of claims 13 to 15 wherein said control information creating unit uses a message specified by the ITU-T recommendation H.245 as said control information.

17. The moving picture reception/decoding device as defined in any one of claims 13 to 15 wherein said control information creating unit uses videoFastUpdate commands specified by the ITU-T recommendation H.245 as said control information.

18. The moving picture reception/decoding device as defined in any one of claims 13 to 15 wherein said control information creating unit uses a method specified by RFC 3261 recommendation SIP as said control information.

19. The moving picture reception/decoding device as defined in any one of claims 13 to 15 wherein said control information creating unit uses the INFO method specified by RFC 3261 recommendation SIP as said control information.

20. (amended) A moving picture encoding/transmission device encoding video signals using a predetermined moving picture compression encoding method, and transmitting a bit stream, **characterized by** comprising:
a control information receiving unit that receives control information for controlling the operation of said moving picture encoding/transmission device, said control information being created/transmitted, irrespective of occurrence/nonoccurrence of the image quality deterioration caused by transmission error;
a control information analyzing unit that analyzes said control information and outputs encoding control information for controlling said encoding;
a moving picture encoding unit that executes said encoding according to said encoding control information; and
a transmission band judging unit that outputs an encoding control information creating command for controlling said control information analyzing unit according to transmission band information calculated from said transmitted bit stream.

21. The moving picture encoding/transmission device as defined in claim 20 wherein said control information analyzing unit analyzes said control information and outputs said encoding control information only when it receives said encoding control information creating command.

22. The moving picture encoding/transmission device as defined in claim 20 or 21 wherein said moving picture encoding unit encodes at least a part of frames in an intra-frame encoding mode according to said encoding control information.

23. The moving picture encoding/transmission device as defined in any one of claims 20 to 22 wherein said control information analyzing unit is able to analyze a message specified by the ITU-T recommendation H.245 as said control information.

24. The moving picture encoding/transmission device as defined in any one of claims 20 to 22 wherein said control information analyzing unit is able to analyze videoFastUpdate commands specified by the ITU-T recommendation H.245 as said control information.

25. The moving picture encoding/transmission device as defined in any one of claims 20 to 22 wherein said control information analyzing unit is able to analyze a method specified by RFC 3261 recommendation SIP as said control information.

26. The moving picture encoding/transmission device as defined in any one of claims 20 to 22 wherein said control information analyzing unit is able to analyze the INFO method specified by RFC 3261 recommendation SIP as said control information.

27. (amended) A gateway interconnecting networks between which a bit stream encoded by a moving picture encoding/transmission device using a predetermined moving picture compression encoding method is sent/received, **characterized by** comprising:
a control information creating unit that creates control information for controlling the operation of said moving picture encoding/transmission device, irrespective of occurrence/nonoccurrence of the image quality deterioration caused by transmission error; and
a control information transmitting unit that transmits said control information to said moving picture encoding/transmission device.

28. The gateway as defined in claim 27 wherein said control information creating unit creates said control information at a predetermined interval.

29. The gateway as defined in claim 27 or 28 wherein said control information creating unit uses a message specified by the ITU-T recommendation H.245 as said control information.

30. The gateway as defined in claim 27 or 28 wherein said control information creating unit uses videoFastUpdate commands specified by the ITU-T recommendation H.245 as said control information.

31. The gateway as defined in claim 27 or 28 wherein said control information creating unit uses a method specified by RFC3261 recommendation SIP as said control information.

32. The gateway as defined in claim 27 or 28 wherein said control information creating unit uses the INFO method specified by RFC3261 recommendation SIP as said control information.

33. (amended) A gateway interconnecting networks between which a bit stream encoded by a moving picture encoding/transmission device using a predetermined moving picture compression encoding method is sent/received, **characterized by** comprising:
a control information creating unit that creates control information for controlling the operation of said moving picture encoding/transmission device, irrespective of occurrence/nonoccurrence of the image quality deterioration caused by transmission error;
a control information transmitting unit that transmits said control information to said moving picture encoding/transmission device; and
a transmission band judging unit that outputs a control information creating command for controlling said control information creating unit according to transmission band information calculated from received said bit stream.

34. The gateway as defined in claim 33 wherein said transmission band judging unit outputs said control information creating command that instructs the operation interval of said control information creating unit to be changed according to said transmission band information, and said control information creating unit changes the interval at which it creates said control information according to said control information creating command.

35. The gateway as defined in claim 33 wherein said transmission band judging unit outputs said control information creating command that instructs the operation of said control information creating unit to be started according to said transmission band information; and
said control information creating unit creates said control information only when it receives said control information creating command.

36. The gateway as defined in any one of claims 33 to 35 wherein said control information creating unit uses a message specified by the ITU-T recommendation H.245 as said control information.

37. The gateway as defined in any one of claims 33 to 35 wherein said control information creating unit uses videoFastUpdate commands specified by the ITU-T recommendation H.245 as said control information.

38. The gateway as defined in any one of claims 33 to 35 wherein said control information creating unit uses a method specified by RFC 3261 recommendation SIP as said control information.

39. The gateway as defined in any one of claims 33 to 35 wherein said control information creating unit uses the INFO method specified by RFC recommendation 3261 SIP as said control information.

40. A moving picture communication system configured by connecting the moving picture reception/decoding device as defined in any one of claims 1 to 6 and 13 to 19, and the moving picture encoding/transmission device as defined in any one of claims 7 to 12 and 20 to 26.

41. A moving picture communication system including the gateway as defined in any one of claims 27 to 39 and the moving picture encoding/transmission device as defined in any one of claims 7 to 12 and 20 to 26.

42. (amended) A moving picture communication method by a pair of a moving picture encoding/transmission device that encodes video signals using a predetermined moving picture compression encoding method and transmits a bit stream, and a moving picture reception/decoding device that decodes the bit stream, comprising:
a step where said moving picture reception/decoding device creates control information for controlling the operation of said moving picture encoding/transmission device, irrespective of occurrence/nonoccurrence of the image quality deterioration caused by transmission error, and transmits it to said moving picture encoding/transmission device;
a step where said moving picture encoding/transmission device analyzes said control information, outputs encoding control information for controlling said encoding, and executes said encoding according to said encoding control information; and
a step where said moving picture reception/decoding device decodes said bit stream encoded by said encoding according to said encoding control information.

43. (amended) A moving picture communication method by a pair of a moving picture encoding/transmission device that encodes video signals using a predetermined moving picture compression encoding method and transmits a bit stream, and a moving picture reception/decoding device that decodes the bit stream, comprising:
a step where said moving picture reception/decoding device creates control information for controlling the operation of said moving picture encoding/transmission device, irrespective of occurrence/nonoccurrence of the image quality deterioration caused by transmission error, and transmits it to said moving picture encoding/transmission device;
a step where said moving picture encoding/transmission device analyzes said control information, outputs encoding control information for controlling said encoding, and executes said encoding according to said encoding control information; and
a step where said moving picture reception/decoding device decodes said bit stream encoded by said encoding according to said encoding control information and feeds transmission band information calculated from said received bit stream back to the processing of creating control information; wherein
said moving picture reception/decoding device requests an image refresh operation corresponding to the reception band.

44. (amended) A moving picture communication method by a pair of a moving picture encoding/transmission device that encodes video signals using a predetermined moving picture compression encoding method and transmits a bit stream, and a moving picture reception/decoding device that decodes the bit stream, comprising:
a step where said moving picture reception/decoding device creates control information for controlling the operation of said moving picture encoding/transmission device, irrespective of occurrence/nonoccurrence of the image quality deterioration caused by transmission error, and transmits it to said moving picture encoding/transmission device;
a step where said moving picture encoding/transmission device analyzes said control information and outputs encoding control information for controlling said encoding;
a step where said moving picture encoding/transmission device executes said encoding according to said encoding control information and transmission band information calculated from a transmitted bit stream; and
a step where said moving picture reception/decoding device decodes said bit stream encoded by said encoding according to said encoding control information; wherein
said moving picture encoding/transmission device performs an image refresh operation according to control information from the receiving side and the transmission band.
